Europäisches Patentamt

European Patent Office

Office européen des brevets

(19)

(11) Publication number: **0 372 371**
**A1**

(12) **EUROPEAN PATENT APPLICATION**

(21) Application number: **89122034.5**

(22) Date of filing: **29.11.89**

(51) Int. Cl.⁵: **B63B 27/14**

(30) Priority: **09.12.88 IT 1260488**

(43) Date of publication of application:
**13.06.90 Bulletin 90/24**

(84) Designated Contracting States:
**AT BE CH DE ES FR GB GR LI LU NL SE**

(71) Applicant: **ANSALDO S.p.A.**
**Piazza Carignano 2**
**I-16128 Genoa(IT)**

Applicant: **Alessandrini, Renato**
**Corso Italia, 2**
**I-16043 Chiavari(IT)**

(72) Inventor: **Alessandrini, Renato**
**Corso Italia 2**
**I-16043 Chiavari(IT)**

(74) Representative: **Porsia, Bruno et al**
**c/o Succ. Ing. Fischetti & Weber Via Caffaro**
**3/2**
**I-16124 Genova(IT)**

(54) **Gangway for vessels.**

(57) The invention relates to vessels, particularly to photovoltaic panels to be placed onboard of vessels provided with batteries. According to the invention, a photovoltaic panel or photovoltaic panels (7) is or are associated with a gangway (2) that most of the vessels have. The invention proposes a particular embodiment of a vessel gangway (2), consisting of a framework (3) and a floor supported in the gangway framework (3), with the gangway floor being formed by one or more photovoltaic panels (7).

Fig.1

EP 0 372 371 A1

## Gangway for vessels

The invention relates to vessels, particularly to those vessels that are provided with batteries. The batteries are a component of a vessel outfit which is of a fundamental importance for a safe navigation, especially in motor vessels. A proper operation of the batteries is important not only for starting the vessel motors, but also for feeding all the electric or electronic nautical instruments, such as radios and like instruments, so that the batteries help even psychologically to the vessel safety. Therefore, one of the main problems related to onboard batteries, is to maintain their efficiency and their level of charge in a perfect condition.

In order to avoid a lowering in the charge of batteries, and to have these batteries continuously recharged, many attemps have been made by nautics as to the use of photovoltaic panels on vessels. However, remarkable results were not attained heretofore from the use of photovoltaic panels on vessels. Actually, the major problem resides in the difficulty of finding a horizontally, or substantially horizontally directed suitable surface for the photovoltaic panels to be placed thereon, without the photovoltaic panels causing trouble or being an impediment, and without the risk that these panels may be concealed or damaged. However big the vessels may be, very few generally are the vessel surfaces fit for this purpose, if parts of the main deck or of the other decks, that desirably should be left clear both for working and for allowing the passengers to stay thereon, are not wanted to be occupied. Therefore, the use of photovoltaic panels still is very limited, owing to the fact that in most instances, photovoltaic panels with a surface being sufficient for guaranteeing the required power, cannot be lodged on a vessel.

In order to obviate to such drawbacks, in some vessels the photovoltaic panels were positioned on the vessel outside, and were applied, for example, to the external face of the vessel sides, so as to be swingable from a rest position which is parallel to the respective side of the vessel, to an operative horizontal position. The thus positioned photovoltaic panels however disturb the navigation, and when the sea is rough, the said panels are often damaged, or even snatched out, for example, by the waves beating against them.

The object of the invention therefore is to provide a particularly advantageous arrangement of photovoltaic panels in vessels, whereby the aforementioned drawbacks will be simply, economically, and safely avoided.

This object is attained by the invention with the association of one or more photovoltaic panels which are connected to the electric system of a vessel, with the gangway that most of the vessels, particularly motor vessels, have.

Therefore, a vessel part that is normally used for a rather short time for landing, but is not used when navigating, is employed for photovoltaic panels to be mounted thereon, so that the photovoltaic panels no more stand in the way, or are an impediment. Moreover, gangways usually have a rather large surface, so that photovoltaic panels of such a size that is sufficient for guaranteeing a continuous and effective recharging of the batteries, and for producing the required power to be fed to the nautical instruments, can be placed on a gangway. Particularly in motor vessels, but not in these vessels only, the gangway is supported by two davits usually located astern and, during the navigation, the gangway is blocked in a substantially horizontal, or slightly inclined position, which is favourable for a good exposure of the gangway to sunlight.

A particular embodiment is provided by the invention, in which, in a gangway consisting of a framework and a floor, the gangway floor is formed by one or more photovoltaic panels.

According to an improvement to the said embodiment, the gangway is provided with devices for protectively covering in a removable manner the photovoltaic panel or panels forming the gangway floor. Thus, particularly when the gangway has to be used for a more long-lasting time than normal, such as, for example, when provisions or other goods are being taken aboard, the photovoltaic panel or panels can be suitably protected against any strains resulting from a more protracted use of the gangway.

Also other features further improving the above disclosed gangway form the object of the invention, and are the subject of the dependent Claims.

The particular features of the invention and the advantages arising therefrom will appear more in detail from the specification of some preferred embodiments thereof, which are shown by way of non-limiting examples in the accompanying drawings, in which:

Figure 1 is a perspective view of the aft end of a motor vessel, with the gangway according to one embodiment of the invention being placed thereat.

Figure 2 is a cross-sectional view through the gangway according to Figure 1.

Figures 3 and 4 respectively are a longitudinal sectional view, and a cross-sectional view of an improvement to the gangway embodiment according to Figure 1.

Figure 4 is a perspective view of a modified embodiment of the gangway according to Figure 1.

In the Figures and in the following specfication, the particular means for electrically connecting the photovoltaic panels to the vessel's electric system are omitted, since the same are generally known, and do not form the object of the invention.

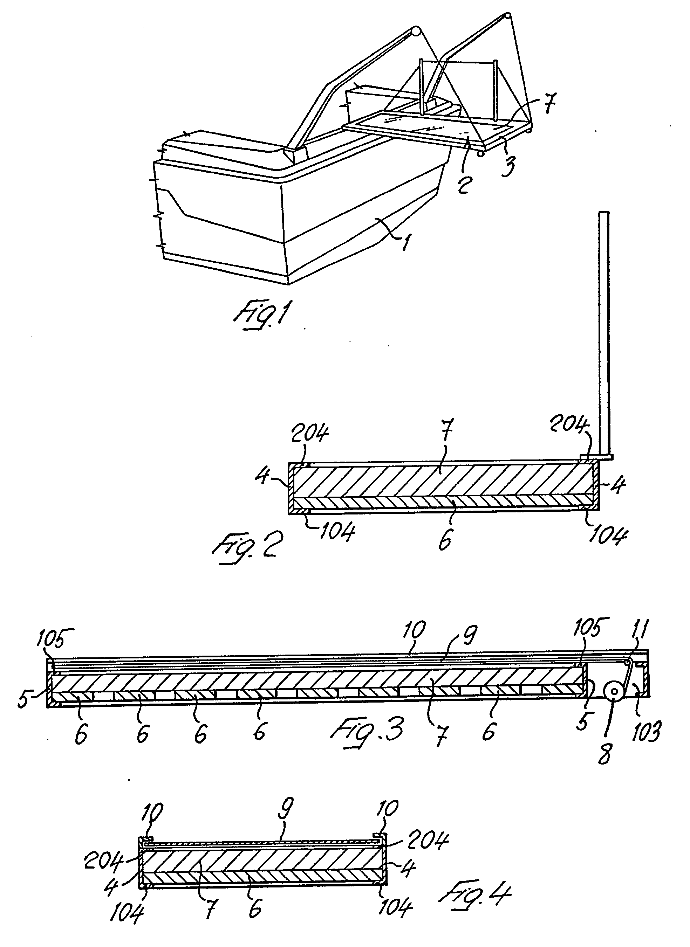

Diagrammatically shown in Figure 1 is the aft end of a vessel, particularly a motor vessel. The gangway, which is designated as a whole by numeral 2, is fitted in the median zone of the top side of the vessel back-board 1, and is supported at the corners of its free end side by two davits which are fixed in position on the said back-board 1, respectively on either side of gangway 2.

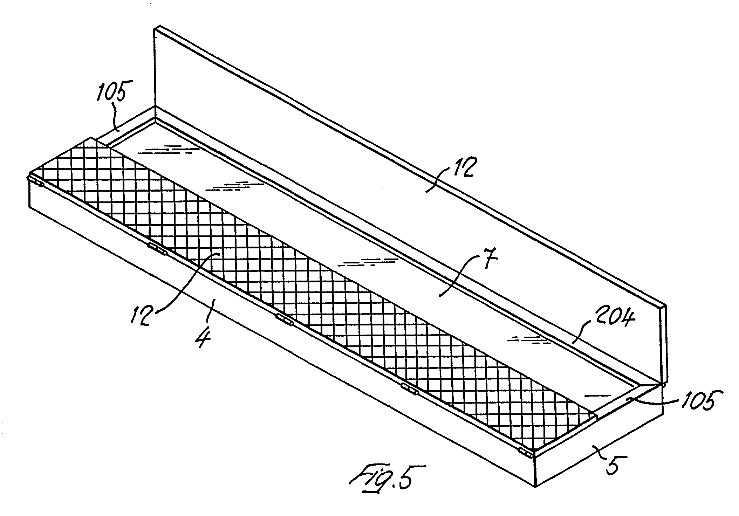

As shown in Figure 2, and more clearly in Figure 3, the gangway 2 consists of a framework 3 with a peripheral frame formed by two longitudinal channel members 4 and two channel crosspieces 5 fitted and joined each to the respective ends of said members 4. The underside of gangway 2 is provided with a set of crosspieces 6 arranged in an equispaced, parallel relation. The ends of crosspieces 6 are borne by the lower flanges 104 of the longitudinal channel members 4. A photovoltaic panel 7 forming at the same time the floor of gangway 2, is lodged in framework 3, on the crosspieces 6 which support the photovoltaic panel 7. In the shown embodiment, the photovoltaic panel 7 is form-locked in framework 3. The framework 3 actually is of an inside length and width that correspond to the size of the photovoltaic panel 7. The upper flanges 204 of the longitudinal channel members 4 of framework 3 and the upper flanges 205 of its channel crosspieces 5 are engaged on the side edges of the upper face of the photovoltaic panel 7. The thickness of the photovoltaic panel 7 is equal to the distance between the top side of the photovoltaic panel-supporting crosspieces 6 and the inward side of the upper flanges 204. The framework 3 may be made from any suitable material, particularly from aluminum or from any metal capable to withstand the oxidising action by sea water.

The photovoltaic panel 7 used in this embodiment, which is only diagrammatically shown in the Figures, is a photovoltaic panel of the rigid type, which is normally available in the trade. In this embodiment, the photovoltaic cells forming the said panel, are mounted on a rigid base member and are covered with a rigid plate made from a transparent material, particularly a transparent plastics material. The said photovoltaic panel thus has an inherent stiffness that is sufficient for the floor of gangway 2 to be formed thereby. The real and proper function of carrying the photovoltaic panel 7 is performed by the framework 3 and, thanks to its construction, the strain on the photovoltaic panel 7 is very low, so that the said panel will be prevented from becoming damaged.

Figures 3 and 4 respectively are a longitudinal sectional view and a cross-sectional view of an improvement to the gangway according to Figure 1. This improvement resides in a device for protectively covering in a removable manner the upper face of the photovoltaic panel 7. For the rest, the gangway according to Figures 2 and 3, is made like the gangway according to the above described embodiment.

As shown particularly in Figure 3, the device for remov ably covering the photovoltaic panel 7 consists of a roller 8 on which a web 9 of covering material is wound, such as, for example, a roller fitted with a return spring for automatically rewinding the web 9. The roller 8 is located in an extension 103 at one end of the internal hollow space in framework 3, and is arranged parallel to the photovoltaic panel-supporting crosspieces 6. The web 9 wound on the said roller 8, is of a width that substantially corresponds to the width of framework 3. If the gangway floor is to be covered, the web 9 will be caused to slide on the surface of the floor of gangway 2, with both of its side edges being each engaged in the respective guide 10 longitudinally extending from and above the upper side edge of the relative longitudinal channel member 4. A deflecting roller 11 is further provided transversely to the ends of guides 10, which are associated with the roller 8, whereby the gangway floor-covering web 9 is allowed to more smoothly slide on the gangway floor. The said web 9 may be formed from any suitable material, such as a fabric, or the like, otherwise the same may be formed from a rigid material, in the fashion of a rolling gate.

Thus, any time the gangway floor, or rather the photovoltaic panel 7, wants to be protected against an excessively high strain, the protective material web 9 will be pulled and unwound from the roller 8, so that the photovoltaic panel 7 becomes covered thereby, while when such a protective covering for the gangway floor is no more required, the web 9 will be simply re-wound on roller 8. The removable covering 9 also performs the function of rendering less slippery the floor of gangway 2, formed by the photovoltaic panel 7.

The gangway 2 according to the modified embodiment shown in Figure 5, is identical to the gangway embodiment shown in Figure 1, but for the device for removably covering the gangway floor, which is of a different construction.

In this modified embodiment, the covering for the gangway floor consists of two swingable winglike members 12, which by their outward side edges are each hingedly connected to the outer upper side edge of the respective longitudinal channel member 4. Each wing-like member 12 has a width that is about one-half of the width of framework 3, and a length that is substantially equal to the length of framework 3. The wing-like members 12 may be formed from any suitable material, and may be made in many different manners, and may, for example, be in form of solid panels of wood, of metal, plastics material, or the like, otherwise they may each consist of a rigid network, or a latticework, made of metal, of wood, or any other suitable material, to be fitted in the respective frame, or the like. The said wing-like members 12 are swingable from their upstanding rest position into their operative position on the floor of gangway 2, any time the said floor is to be protected, such as in the instance of goods-loading operations, and the said members 12 are swingable back into their rest position, in which the gangway floor, or rather the photovoltaic panel 7, is again exposed to sunlight.

Of course the invention is not limited to the just des cribed and shown embodiments, and the same may be widely changed and modified, the more so in construction. Thus, the gangway 2 may be provided with more than one photovoltaic panel, particularly when the gangway is formed by two hingedly connected sections. Instead of a rigid photovoltaic panel, or of rigid photovoltaic panels, also other types of photovoltaic panels may be used, such as flexible-type photovoltaic panel or panels, for which a plate of a rigid, transparent material should be provided for covering the surface thereof, while also a rigid base plate may be provided for the lower side of the flexible photovoltaic panel or panels to be supported thereby. As an alternative, particularly suitable different constructions of framework 3 may be further provided, for any other types of photovoltaic panels to be fitted therein. In order to prevent the risk that a person may slip on the gangway floor, the surface of the photovoltaic panel or panels may be totally or partly covered with a layer of non-slippery transparent material, if the photovoltaic panel or panels is or are not yet provided with an overlying plate with non-slippery properties.

## Claims

1. A gangway for vessels, characterized in that one or more photovoltaic panels (7) are associated with the gangway (2), and are connected to the onboard electric system, particularly to the onboard batteries.

2. A gangway for vessels consisting of a framework (3) and a floor borne by the framework (3), and according to Claim 1, characterized in that the gangway floor is formed by one or more photovoltaic panels (7).

3. The gangway according to any one of Claims 1 or 2, characterized in that it is fitted with a device (8, 9: 12) for protectively covering in a removable manner the upper face of the photovoltaic panel or panels (7).

4. The gangway according to any one or more of the preceding Claims, characterized in that the photovoltaic panel or panels (7) are photovoltaic panels of the rigid type, and are form-locked in a framework (3) consisting of a peripheral frame formed by two longitudinal channel members (4) and two channel crosspieces (5) joined and fitted to the respective ends of said members (4), with one or more members (6) for supporting the photovoltaic panel or panels (7) being fixed to the lower inward side of said framework (3), and forming a plane for the photovoltaic panel or panels (7) to be carried thereby.

5. The gangway according to Claim 4, characterized in that the framework (3) made in form of a peripheral frame, has the side ends, the top sides, and the bottom sides of its longitudinal channel members (4) and of its channel crosspieces (5) engaged on the said photovoltaic panel or panels (7), and the said photovoltaic panel-supporting members consist of crosspieces (6) which are fixed in a parallel equispaced relation to the lower inward side of framework (3), over the entire longitudinal extension of said framework (3).

6. The gangway according to Claim 4, characterized in that the photovoltaic panel-supporting members (6) may be in form of a plate, a network, or a latticework.

7. The gangway according to any one or more of the preceding Claims, characterized in that the framework (3) may be made of metal, particularly of a metal capable to withstand the oxidizing action by seawater, or of wood, plastics material, or the like.

8. The gangway according to any one or more of the preceding Claims, characterized in that a device is provided for protectively covering in a removable manner the photovoltaic panel or panels (7), which consists of a covering material web (9) having a width that substantially corresponds to the width of framework (3), and the said web (9) is wound on a roller (8) provided at one end of the said framework (3) and arranged parallel to the photovoltaic panel-supporting crosspieces (6), the said covering material web (9) being unwound from the roller 8, and being laid on the surface of the floor of gangway (2), for covering the photovoltaic panel or panels (7), and being re-wound on the said roller (8) for exposing the photovoltaic panel or panels (7) to sunlight.

9. The gangway according to Claim 8, characterized in that a pair of guides 10 are provided, which longitudinally extend each from and above the relative longitudinal upper side edge of framework (3), and in which the respective side edge of the covering material web (9) comes to be engaged, a deflecting roller (11) being provided at the end of the longitudinally extending guides (10) which is associated with the roller (8), on which the web (9) is wound.

10. The gangway according to any one or both of Claims 8 and 9, characterized in that the covering material web (9) may be made from a rigid material and, particularly, it may consist of hingedly connected, parallel slats of a rigid material, which are arranged transversely to the longitudinal sides of framework (3).

11. The gangway according to any one or both of Claims 8 and 9, characterized in that the covering material web (9) may be made from a flexible material, such as a fabric of synthetic or natural fibres, or from a foil of plastics material.

12. The gangway according to Claim 3, characterized in that the device for protectively covering in a removable manner the photovoltaic panel or panels (7) consists of two swingable, wing-like members (12) which by their longitudinal outward side edge are each hingedly connected to the respective, longitudinal upper outer side edge of framework (3), the said wing-like members (12) extending each over about one-half of the width of the said framework (3).

13. The gangway according to Claim 12, characterized in that the swingable wing-like members (12) are in form of solid plates of a rigid material, or in form of a lattice-work with or without a frame, or of a network with or without a frame, or the like, and are made of a metal capable to withstand the oxidizing action by seawater, or of plastics material, of wood, or the like.

14. The gangway according to any one or more of the preceding Claims, characterized in that the photovoltaic panel or panels (7) are of the flexible type, and the framework (3) is provided with a rigid base plate for the photovoltaic panel or panels (7) to be supported thereby, and a rigid, photovoltaic panel-covering plate of a transparent material.

15. The gangway according to any one or more of the preceding Claims, characterized in that the photovoltaic panel or panels (7) is or are provided with a non-slippery surface, or with a layer of a transparent material having non-slippery properties.

Fig. 1

Fig. 2

Fig. 3

Fig. 4

Fig.5

105

12

7

12

4

204

105

5

EP 0 372 371 A1

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | US-A-3 982 963 (MAHONEY) <br> * Abstract; fig. * <br> --- | 1 | B 63 B 27/14 |
| A | US-A-4 239 555 (SCHARLACK) <br> * Abstract; figure 2 * <br> --- | 1 | |
| A | FR-A-1 599 885 (MARIJON) <br> * Page 2; fig. * <br> ----- | 1 | |

| | TECHNICAL FIELDS SEARCHED (Int. Cl.5) |
|---|---|
| | B 63 B <br> H 01 L |

The present search report has been drawn up for all claims

| Place of search | Date of completion of the search | Examiner |
|---|---|---|
| THE HAGUE | 26-02-1990 | VISENTIN, M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)